# EUROPÄISCHE PATENTSCHRIFT

(11) **EP 2 878 018 B1**
(45) Veröffentlichungstag und Bekanntmachung des Hinweises auf die Patenterteilung: **15.11.2017**
(21) Anmeldenummer: 13742214.3
(22) Anmeldetag: 25.07.2013
(51) Int. Cl.: H01M 2/10, H01M 2/20, H01M 10/42, H01M 10/48

(54) **ENERGIESPEICHERVORRICHTUNG**
ENERGY STORAGE DEVICE
DISPOSITIF D'ACCUMULATION D'ÉNERGIE

(30) Priorität: 27.07.2012 DE 102012213273
(43) Veröffentlichungstag der Anmeldung: 03.06.2015
(73) Patentinhaber: INVENOX GmbH, 85748 Garching (DE)
(72) Erfinder: ECKL, Richard, 81247 München (DE); WALDER, Georg, I-39030 St. Martin/gsies (IT); STEFFAN, Moritz, 83026 Rosenheim (DE); HAMMER, Martin R., 80807 München (DE); BURDA, Peter, 80796 München (DE)
(74) Vertreter: Isarpatent
(86) Internationale Anmeldenummer: PCT/EP2013/065765
(87) Internationale Veröffentlichungsnummer: WO 2014/016393

(56) Entgegenhaltungen:
- WO-A2-2010/031856
- DE-A1-102009 018 787
- DE-A1-102009 035 458
- US-A1- 2010 104 935
- US-A1- 2011 244 310

## Beschreibung

Die Erfindung betrifft eine Energiespeichervorrichtung für ein Fahrzeug und insbesondere eine Vorrichtung zur Kontaktierung und Kühlung von elektrischen Energiespeicherzellen des Energiespeichers.

In vielen Anwendungen ist es notwendig, elektrische Energie zu speichern. Insbesondere bei Fahrzeugen mit Elektroantrieb bzw. Elektromotor ist es notwendig, elektrische Ladung in einem ausreichenden Ausmaße zur Verfügung zu stellen und in einem Energiespeicher des Fahrzeuges zu speichern.

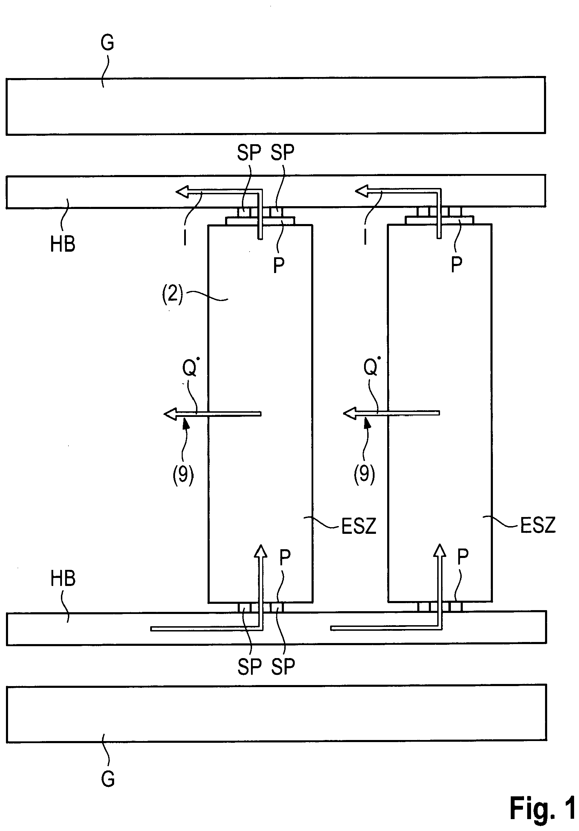

Fig. 1 zeigt einen herkömmlichen Energiespeicher wie er beispielsweise bei Elektrostraßenfahrzeugen eingesetzt wird. Bei dem in Fig. 1 dargestellten herkömmlichen Energiespeicher, bzw. Batteriepack für Automobile werden runde, pouch oder prismatische Batteriezellen verwendet, die an der Ober- oder Unterseite elektrische Pole aufweisen. Die elektrische Verbindung unter den einzelnen Batterie- bzw. Energiespeicherzellen wird dabei überwiegend durch Widerstandsschweißen hergestellt. Dazu wird durch Punktschweißen ein Pol P der Energiespeicherzelle ESZ mit jeweils mehreren Schweißpunkten SP beispielsweise mit einem sogenannten Hiluminband HB verbunden. Das Hiluminband HB besteht aus Hilumin, d.h. aus vernickeltem Stahl, und hat einen höheren elektrischen Widerstand als die Gehäuseteile der Batteriespeicherzellen, die verschweißt werden. Der höhere elektrische Widerstand des Hiluminbandes HB ist notwendig, damit ein Schweißstrom vom Hiluminband zum Batteriegehäuse der jeweiligen Energiespeicherzelle und wieder zurück zu dem Hiluminband HB fließt und nicht direkt über das Hiluminband HB abfließt.

Bei der herkömmlichen Energiespeichervorrichtung, wie sie in Fig. 1 dargestellt ist, wird ein aus den Energiespeicherzellen ESZ jeweils generierter Wärmestrom Q^{•} über deren Mantelfläche abgeführt. Die Kühlung der Energiespeicherzellen ESZ kann dabei beispielsweise über Luft- oder Flüssigkeitskühlung erfolgen. Das verschweißte Batteriepack bzw. die verschweißten Energiespeicherzellen werden in ein elektrisch nicht leitendes Gehäuse G der Energiespeichervorrichtung eingefasst. Der elektrische Strom I, der aus den Energiespeicherzellen fließt, wird über die Pole P der Energiespeicherzelle ESZ und die Schweißpunkte SP auf das Hiluminband HB der Energiespeichervorrichtung abgeleitet.

Das Hiluminband HB der herkömmlichen Energiespeichervorrichtung weist einen höheren elektrischen Widerstand auf als bei elektrischen Leitern ansonsten üblich und erhöht somit den Gesamtinnenwiderstand des in Fig. 1 dargestellten konventionellen Energiespeichers. Darüber hinaus ist bei dem herkömmlichen Energiespeicher gemäß Fig. 1 auf beiden Seiten einer Energiespeicherzelle ESZ ein Schweißprozess zur Kontaktierung der Energiespeicherzellen mit dem Hiluminband HB notwendig. Die herkömmliche Energiespeichervorrichtung, wie sie in Fig. 1 dargestellt ist, benötigt aufgrund der Vielzahl der darin integrierten Energiespeicherzellen ESZ bei der Herstellung eine Vielzahl von Schweißprozessen zur Herstellung der Kontaktierung ein für die Vielzahl von Energiespeicherzellen ESZ. Daher ist der Schweißprozess für die Kontaktierung eines vollständigen Batteriepacks mit einer Vielzahl von Energiespeicherzellen ESZ sehr zeitaufwendig. Ferner ist das Sicherstellen einer gleichbleibenden Qualität der Schweißverbindungen technisch aufwendig. Zudem kann die Zelle während des Schweißprozesses durch den Wärmeeintrag in die Zelle geschädigt werden.

Darüber hinaus hat die herkömmliche Energiespeichervorrichtung, wie sie in Fig. 1 dargestellt ist, den Nachteil, dass eine Kühlung der Energiespeicherzellen ESZ ausschließlich über die Mantelflächen der jeweiligen Energiespeicherzellen ESZ erfolgt. Dadurch kann die Energiespeicherzelle ESZ von außen zwar gekühlt werden, doch bildet sich zum Inneren der Energiespeicherzelle hin ein gewisser Temperaturgradient aus, d.h. die Temperatur in einer Energiespeicherzelle ESZ fällt ausgehend von der Mitte der Energiespeicherzelle ESZ hin nach außen ab. Dieser Temperaturgradient innerhalb einer Energiespeicherzelle führt zu einer ungleichmäßigen Alterung der Batterie- bzw. Energiespeicherzelle ESZ. Eine Kühlung im Inneren der Energiespeicherzelle ist bei der herkömmlichen Anordnung gemäß Fig. 1 nicht möglich, da eine Kühlung über die Schweißkontaktierungen nicht erfolgen kann. Über die Schweißpunkte kann zwar elektrische Energie abgeführt werden, allerdings ist der über die Schweißpunkte SP abführbare Wärmestrom zur Außenkante des Gehäuses G sehr gering.

Die US 2010/104935 A1 beschreibt eine Vorrichtung zur Wärmeableitung von Batteriemodulen. Einzelne Energiespeicherzellen der Batteriemodule weisen jeweils einen ersten Kontaktstreifen und einen zweiten Kontaktstreifen, welche mit dem Plus- bzw. dem Minuspol der Energiespeicherzelle verbunden sein können. Über die Kontaktstreifen sind die Pole der Energiespeicherzellen mit je einer Leiterplatte verbunden.

Die DE 10 2009 018787 A1 beschreibt ein Batteriemodul mit mehreren aneinander angeschlossenen Zellen, welche jeweils einen positiven und einen negativen Anschluss aufweisen. Die einzelnen Zellen sind paarweise parallel geschaltet und die Paare miteinander in Reihe geschaltet. Die Zellen sind Energiespeicherzellen.

Die WO 2010/031856 A2 beschreibt eine Verbindungsplatine mit Verbindungsschlitzen, in welche Elektrodenlaschen von Energiespeicherzellen einführbar sind, wo sie mittels Kontaktelementen kontaktierbar sind. Die Verbindungsplatine weist leitende Stromschienen auf, welche durch elektrisch nicht leitende Bereiche von einer Wärmeleitschicht getrennt sind.

In der US 2011/244310 A1 ist eine wiederaufladbare Batterie mit Kontaktplatten aus Aluminium, Kupfer oder rostfreiem Stahl beschrieben.

Es ist daher eine Aufgabe der vorliegenden Erfindung, eine Vorrichtung zur Kontaktierung von elektrischen Speicherzellen zu schaffen, die die Nachteile der herkömmlichen Anordnung vermeidet, wie beispielsweise die Schädigung der Zelle durch den Wärmeeintrag beim Schweißprozess und eine effektivere Kühlung der Energiespeicherzellen eines Energiespeichers bietet. Weiterhin kann die Energiedichte des Energiespeichers erhöht werden, da die Packungsdichte der Energiespeicherzellen erhöht werden kann.

Diese Aufgabe wird erfindungsgemäß durch eine Vorrichtung mit den in Patentanspruch 1 angegebenen Merkmalen gelöst.

Die erfindungsgemäße Vorrichtung bietet den Vorteil, dass die in den Energiespeicherzellen erzeugte Wärme nicht nur durch die Mantelflächen der Energiespeicherzellen abgeführt wird, sondern zusätzlich großflächig über die thermisch leitfähigen Kontaktelemente.

Durch die zusätzliche zentrale Abführung von Wärme aus der Mitte der elektrischen Energiespeicherzelle an deren Polen wird zudem ein Temperaturgradient innerhalb der Energiespeicherzelle minimiert. Hierdurch wird eine ungleichmäßige Alterung von Energiespeicherzellen innerhalb des Energiespeichers verhindert.

An beiden Polen der elektrischen Energiespeicherzelle sind, bei einer möglichen Ausführungsform der erfindungsgemäßen Vorrichtung stirnseitig, jeweils flache Kontaktelemente aus einem flexiblen Material zwischen dem jeweiligen Pol der elektrischen Energiespeicherzelle und der jeweiligen Leiterplatte vorgesehen.

Bei einer weiteren möglichen Ausführungsform der erfindungsgemäßen Vorrichtung sind die flachen Kontaktelemente fest mit der elektrischen Energiespeicherzelle oder der Leiterplatte verbunden. Dies kann beispielsweise durch ein Siebdruckverfahren geschehen.

Bei einer weiteren möglichen Ausführungsform der erfindungsgemäßen Vorrichtung entstehen die flachen Kontaktelemente erst innerhalb des fertig montierten Akkupacks, indem vor dem Zusammenfügen eine pastöse, aushärtende Masse in den Zwischenraum zwischen elektrischer Energiespeicherzelle und Leiterplatte eingebracht wird.

Aufgrund der großen Fläche und der geringen Materialstärke der thermisch leitfähigen Kontaktelemente und des geringen thermischen Widerstandes des Materials des Kontaktelements ist der thermische Widerstand der jeweiligen flachen Kontaktelemente gering, sodass Wärme in großem Maße effizient aus den elektrischen Energiespeicherzellen abgeleitet wird und die Energiespeicherzellen somit besser gekühlt werden. Da die Kontaktelemente zusätzlich aus einem flexiblen Material hergestellt sind, bieten sie zudem eine gute elektrische und vibrationsfeste Verbindung bzw. Kontaktierung. Die Fläche der Kontaktelemente ist im Verhältnis zu der Größe der Energiespeicherzelle relativ groß, wodurch eine effektive Wärmeableitung gefördert wird.

Bei einer möglichen Ausführungsform der erfindungsgemäßen Vorrichtung sind die elektrischen Energiespeicherzellen an ihren Polen jeweils mit einer bestimmten Anpresskraft zwischen zwei Leiterplatten montiert. Dadurch kann ein elektrischer und thermischer Kontakt sichergestellt werden. Darüber hinaus bietet das Einklemmen der elektrischen Energiespeicherzellen des Energiespeichers zwischen die Leiterplatten den Vorteil einer einfachen Montage.

Durch das laterale Abführen des von den Energiespeicherzellen gelieferten elektrischen Stromes kann die von den Energiespeicherzellen gelieferte elektrische Ladung in einfacher Weise aus dem Energiespeicher über lateral angebrachte elektrische Kontakte abgeleitet werden.

Bei einer möglichen Ausführungsform der erfindungsgemäßen Vorrichtung besteht die elektrisch isolierende Zwischenschicht der Leiterplatte aus einem thermisch leitfähigen Material geringer Materialstärke im Verhältnis zu den übrigen Schichten der Leiterplatten.

Bei einer weiteren möglichen Ausführungsform der erfindungsgemäßen Vorrichtung sind in der elektrisch und thermisch leitfähigen ersten Schicht der Leiterplatte elektrische Sicherungselemente zur Überstromabsicherung vorgesehen.

Bei einer möglichen Ausführungsform der erfindungsgemäßen Vorrichtung dient die Leiterplatte zugleich als Strukturelement bzw. Außenwand des Gehäuses.

Bei einer möglichen Ausführungsform der erfindungsgemäßen Vorrichtung weist der elektrische Energiespeicher mehrere Energiespeicherzellen auf, die in einer Energiespeicherzellengruppe parallel verschaltet sind. Hierdurch kann die Kapazität des elektrischen Energiespeichers erhöht werden.

Bei einer möglichen Ausführungsform der erfindungsgemäßen Vorrichtung sind mehrere Energiespeicherzellengruppen, die jeweils parallel verschaltete Energiespeicherzellen aufweisen, seriell in dem Energiespeicher verschaltet. Dadurch kann die von dem elektrischen Energiespeicher bereitgestellte Spannung erhöht werden.

Bei einer möglichen Ausführungsform der erfindungsgemäßen Vorrichtung sind die seriell verschalteten Energiespeicherzellengruppen des Energiespeichers jeweils über Senseleitungen, die in der Leiterplatte vorgesehen sind, mit einer elektronischen Überwachungseinheit verbunden, welche eine an den Energiespeicherzellengruppen des Energiespeichers jeweils anliegende elektrische Spannung überwacht.

Durch den Verlauf der Senseleitung in der Leiterplatte, welche auch den Nutzstrom führt, kann die Kontaktierung der Sensorleitungen an den Energiespeicherzellen erheblich erleichtert werden, ohne dass hierfür zusätzliche Kabel zu der elektronischen Überwachungseinheit geführt werden müssen. Die Senseleitungen können in einfacher Weise beim Platinenlayout der Leiterplatte berücksichtigt werden. Dies hat zur Folge, dass eine separate Kontaktierung der Sensorleitungen nicht notwendig ist und somit der Verkabelungsaufwand und Herstellungsaufwand signifikant reduziert wird.

Gleiches gilt auch für die Sensorleitungen wie zum Beispiel Sensorleitungen für Temperatursensoren.

Bei einer möglichen Ausführungsform der erfindungsgemäßen Vorrichtung ist für jede Energiespeicherzellengruppe oder für jede einzelne Energiespeicherzelle einer Energiespeicherzellengruppe ein elektrisches Sicherungselement zur Überstromabsicherung in oder auf der ersten Schicht der Leiterplatte vorgesehen. Dadurch kann eine fehlerhafte Energiespeicherzelle mithilfe eines zugehörigen elektrischen Sicherungselementes schnell und zuverlässig abgeschaltet werden, wodurch weitere gefährliche Prozesse innerhalb einer Speicherzelle die bis zum Entflammen einer Zelle führen können, zuverlässig verhindert werden.
Zusätzlich wird durch die einzelne Absicherung jeder Energiespeicherzelle bei einer Fehlfunktion einer einzelnen Zelle beziehungsweise Fehlfunktionen von einer oder mehr Zellen eines möglichen Parallelverbundes die Energieentnahme weiterhin ermöglicht und die Funktionsfähigkeit des Energiespeicherverbundes aufrechterhalten.

Bei einer weiteren möglichen Ausführungsform der erfindungsgemäßen Vorrichtung wird die von einer Energiespeicherzelle oder von einer Energiespeicherzellengruppe des Energiespeichers abgegebene Wärme von mindestens einem zugehörigen Temperatursensor erfasst, der an der Leiterplatte vorgesehen ist und die erfasste Temperatur an die elektronische Überwachungseinheit des Energiespeichers meldet. Dadurch ist es nicht mehr notwendig, Temperatursensoren im Inneren des Speicherzellenmoduls unterzubringen. Zudem können die Temperatursensoren beim Layout der Kontaktierungsplatine berücksichtigt werden und dort direkt vorgesehen werden. Dadurch sinkt der Aufwand der Herstellung des Energiespeichers zusätzlich.

Bei einer weiteren möglichen Ausführungsform der erfindungsgemäßen Vorrichtung sind Ausgleichswiderstände zur Umwandlung von überschüssiger Ladung von Energiespeicherzellen des Energiespeichers in Wärme vorgesehen, wobei die von den Ausgleichswiderständen erzeugte Wärme über das elektrisch und thermisch leitfähige Kontaktelement an die Leiterplatte abgeben wird. Durch die direkte Ableitung der Wärme an das thermisch leitfähige Kontaktelement kann eine Balancing-Leistung des Energiespeichers deutlich erhöht werden und hat dadurch keinen Einfluss auf die Dynamik einer Belastung des Energiespeichers.

Bei einer weiteren möglichen Ausführungsform der erfindungsgemäßen Vorrichtung wird die von den Ausgleichswiderständen abgegebene Wärme über die aus wärmeleitfähigen Schichten bestehende Leiterplatte gleichmäßig zur Vorheizung des Energiespeichers, insbesondere bei niedrigen Umgebungstemperaturen, verteilt. Dies hat den Vorteil, dass zur Vorwärmung des Energiespeichers keine eigene Heizleitung durch eine Wärmequelle bereitgestellt werden muss.

Die Erfindung schafft ferner ein Fahrzeug mit einer Energiespeichervorrichtung mit den in Patentanspruch 14 angegebenen Merkmalen.

Im Weiteren werden mögliche Ausführungsformen der erfindungsgemäßen Vorrichtung unter Bezugnahme auf die beigefügten Figuren näher erläutert.

Es zeigen:
- Fig. 1: eine herkömmliche Anordnung von Energiespeicherzellen;
- Fig. 2: eine Anordnung von Energiespeicherzellen innerhalb eines Energiespeichers zur Darstellung eines Ausführungsbeispiels der erfindungsgemäßen Vorrichtung;
- Fig. 3: ein schematisches Diagramm zur Erläuterung der Funktionsweise der erfindungsgemäßen Vorrichtung;
- Fig. 4: ein Schaltbild zur Erläuterung eines möglichen Ausführungsbeispiels einer erfindungsgemäßen Energiespeichervorrichtung;
- Fig. 5A, 5B: Polanordnungen auf einer Leiterplatte bei einer Ausführungsform der erfindungsgemäßen Energiespeichervorrichtung;
- Fig. 6A, 6B: ein mögliches Platinenlayout von Leiterplatten bei einer Ausführungsform der erfindungsgemäßen Energiespeichervorrichtung;
- Fig. 7A, 7B, 7C: Ausführungsbeispiele von Energiespeicherzellen der erfindungsgemäßen Energiespeichervorrichtung.

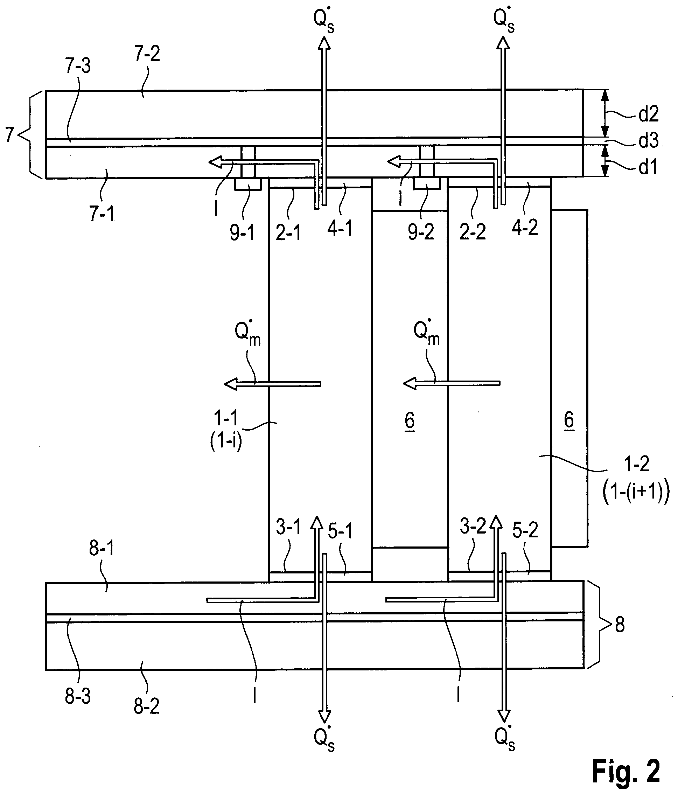

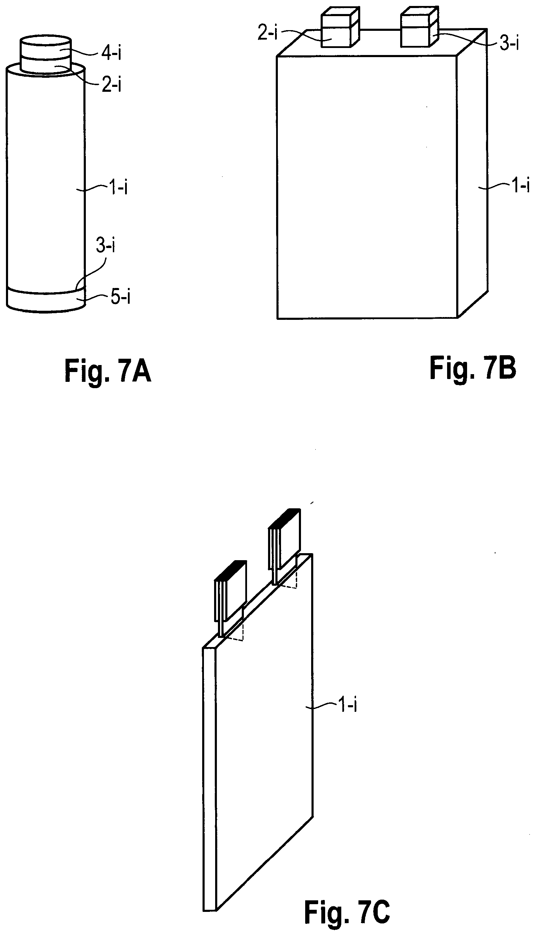

Wie man aus Fig. 2 erkennen kann, weist die erfindungsgemäße Vorrichtung 1 in dem in Fig. 2 dargestellten Ausführungsbeispiel elektrische Energiespeicherzellen 1-1, 1-2 auf, wobei die Energiespeicherzellen 1-1, 1-2 jeweils zwei elektrische Pole 2, 3 besitzen. So weist die erste elektrische Energiespeicherzelle 1-1 einen ersten bzw. positiven elektrischen Pol 2-1 und einen zweiten bzw. negativen elektrischen Pol 3-1 auf. In gleicher Weise weist die zweite Energiespeicherzelle 1-2 einen ersten positiven Pol 2-2 und einen negativen elektrischen Pol 3-2 auf. An den beiden positiven Polen 2-1, 2-2 der elektrischen Energiespeicherzellen 1-1, 1-2 ist jeweils ein Kontaktelement 4-1, 4-2 vorgesehen, wie in Fig. 2 dargestellt. An den beiden negativen Polen 3-1, 3-2 ist ebenfalls ein Kontaktelement 5-1, 5-2 vorgesehen, wie in Fig. 2 dargestellt. Die Kontaktelemente 4-1, 4-2, 5-1, 5-2 bilden Anbindungselemente, die ein elastisches Kontaktierungsmaterial aufweisen, welches elektrisch und thermisch leitfähig ist und seine elastische Verformung aus der Änderung einer Längenausdehnung in einer Richtung senkrecht zu den Kontaktoberflächen der Batteriepole der Energiespeicherzellen 1-1, 1-2 bezieht. Die Oberfläche eines Batteriepols ist dabei ganz oder teilweise durch das elastische Kontaktierungsmaterial bedeckt und wird hierdurch vor Kontakt mit Feuchtigkeit geschützt. Die Kontaktelemente bzw. Anbindungselemente können aufgeklebt oder auf andere Weise befestigt werden. Bei einer möglichen Ausführungsform besteht das elastische Kontaktierungsmaterial der Kontaktelemente 4-1, 4-2, 5-1, 5-2 aus einer Mischung aus Elastomer und Metallpartikeln. Bei einer möglichen Ausführungsvariante weisen die Metallpartikel eine Oberflächenbeschichtung auf. Diese Oberflächenbeschichtung kann galvanisch oder nicht galvanisch aufgebracht werden. Die Energiespeicherzellen 1-1, 1-2 bestehen bei einer möglichen Ausführungsform aus Batteriezellen. Weiterhin können die Energiespeicherzellen 1-1, 1-2 auch aufladbare Akkumulatorzellen sein. Die Energiespeicherzellen 1-i können auch physikalische Energiespeicher, insbesondere Kondensatoren, sein. Bei einer möglichen Ausführungsform sind die Energiespeicherzellen 1-1, 1-2 zylindrisch aufgebaut und weisen jeweils eine Mantelfläche auf (Fig. 7A zeigt eine zylindrisch aufgebaute Energiespeicherzelle 1-i). Die Energiespeicherzellen 1-1, 1-2 können, wie in Fig. 2 dargestellt, in einer Tragstruktur 6 eingesetzt sein, die beispielsweise aus einem elektrisch isolierenden Kunststoffmaterial besteht. Bei einer bevorzugten Ausführungsform ist das Material der Tragstruktur 6 thermisch leitfähig, sodass die an den Mantelflächen der Energiespeicherzellen 1-1, 1-2 vorhandene Wärme als Wärmestrom Q^{•}ₘ über die Tragstruktur 6 abfließen kann. Zur Optimierung der Wärmeabgabe über die Mantelfläche kann die Tragstruktur ein Kühlmedium (Luft, Wasser, etc.) führen. Bei einer möglichen Ausführungsform weist die Tragstruktur 6 zylindrische Ausnehmungen auf, in die zylindrisch aufgebaute Energiespeicherzellen 1-i passgenau eingesetzt werden können. Die eingesetzten Energiespeicherzellen 1-1, 1-2 sind vorzugsweise austauschbar in die Tragstruktur 6 eingesetzt. An den Stirnflächen der Energiespeicherzellen 1-1, 1-2, welche gleichzeitig die Pole der Energiespeicherzellen bilden, sind die oberen und unteren Kontaktelemente 4-1, 4-2 bzw. 5-1, 5-2 vorgesehen. Diese Kontaktelemente sind sowohl elektrisch als auch thermisch leitfähig. Bei dem in Fig. 2 dargestellten Ausführungsbeispiel sind die Energiespeicherzellen 1-1, 1-2 über die oberen Kontaktelemente 4-1, 4-2 mit einer ersten Leiterplatte 7 und über die unteren Kontaktelemente 5-1, 5-2 mit einer unteren Leiterplatte 8 elektrisch und thermisch leitfähig verbunden. Die Leiterplatten 7, 8 dienen jeweils zur Trennung des von den Energiespeicherzellen 1-i über die Kontaktelemente erhaltenen elektrischen Stromes I von einem über die Kontaktelemente erhaltenen Wärmestrom Q^{•}ₛ. Wie man aus Fig. 2 erkennen kann, fließt ausgehend von den Stirnseiten der elektrischen Speicherzellen 1-i jeweils ein zweiter Wärmestrom Q^{•}ₛ über die thermisch leitfähigen Kontaktelemente 4, 5 der oberen und unteren Leiterplatte 7, 8. Die Leiterplatten 7, 8 sind derart aufgebaut, dass sie einen von einer Energiespeicherzelle über ein Kontaktelement erhaltenen elektrischen Strom I von einem über das Kontaktelement erhaltenen Wärmestrom Q^{•}ₛ trennen.

Zur Trennung des stirnseitigen Wärmestromes Q^{•}ₛ von dem elektrischen Strom I sind die beiden Leiterplatten 7, 8 bei dem dargestellten Ausführungsbeispiel aus verschiedenen Schichten aufgebaut. Das heißt, die obere Leiterplatte 7 weist eine wärmeleitende und elektrisch leitende erste Schicht 7-1 auf, die direkt an den oberen Kontaktelementen 4-1, 4-2 anliegt. Diese erste elektrisch leitfähige Schicht 7-1 führt den über die Kontaktelemente 4-1, 4-2 fließenden elektrischen Strom I lateral ab, wie in Fig. 2 dargestellt. Darüber hinaus überträgt die elektrisch leitfähige und thermisch leitfähige Schicht 7-1 den über die Kontaktelemente 4-1, 4-2 jeweils fließenden Wärmestrom Q^{•}ₛ an eine zweite wärmeleitende Schicht 7-2 der Leiterplatte 7. Die zweite thermisch leitfähige Schicht 7-2 der Leiterplatte 7 gibt den von der ersten Schicht 7-1 empfangenen Wärmestrom Q^{•}ₛ an eine Umgebung oder an ein Kühlmedium ab, wie in Fig. 2 dargestellt. Bei dem in Fig. 2 dargestellten Ausführungsbeispiel befindet sich zwischen der ersten thermisch und elektrisch leitfähigen Schicht 7-1 und der zweiten thermisch leitfähigen Schicht 7-2 der Leiterplatte 7 eine elektrisch isolierende Zwischenschicht 7-3, die notwendig ist, sofern die zweite thermisch leitfähige Schicht 7-2 elektrisch leitfähig ist. Die Dicke d1 der ersten elektrisch und thermisch leitfähigen Schicht 7-1 kann in einem Bereich von beispielsweise 20 bis 500 µm liegen. Die Dicke d2 der zweiten zumindest thermisch leitfähigen Schicht 7-2 kann z.B. in einem Bereich von beispielsweise 1 bis 5 mm liegen, d.h. die zweite thermisch leitfähige Schicht 7-2 der Leiterplatte 7 ist bei einer bevorzugten Ausführungsform dicker als die erste elektrisch und thermisch leitfähige Schicht 7-1 der ersten Leiterplatte 7. Die dazwischenliegende Zwischenschicht 7-3 weist eine Dicke d3 auf, die bei einer bevorzugten Ausführungsform relativ dünn ist wobei die Dicke d3 kleiner als die Dicke d1 und die Dicke d2 der beiden übrigen Schichten 7-1, 7-2 der Leiterplatte 7 ist. Die Zwischenschicht 7-3 besteht aus einem elektrisch isolierenden Material, das auch thermisch leitfähig ist, sodass der Wärmestrom Q^{•}ₛ durch sie hindurchfließen kann, wie in Fig. 2 dargestellt. Bei einer möglichen Ausführungsform weist die Zwischenschicht 7-3 eine thermische Leitfähigkeit von mindestens 0,1 Watt pro Kelvinmeter auf.

Die untere Leiterplatte 8 kann, wie in Fig. 2 dargestellt, in gleicher Weise aufgebaut sein wie die obere Leiterplatte 7. Dabei entspricht die erste thermisch und elektrisch leitfähige Schicht 8-1 der ersten Schicht 7-1 der oberen Leiterplatte 7. Die zweite thermisch leitfähige Schicht 8-2 der unteren Leiterplatte 8 entspricht der Schicht 7-2 der oberen Leiterplatte 7. Die elektrisch isolierende und gleichzeitig thermisch leitfähige Zwischenschicht 8-3 der unteren Leiterplatte 8 entspricht der Zwischenschicht 7-3 der oberen Leiterplatte 7.

Bei dem in Fig. 2 dargestellten Ausführungsbeispiel sind die beiden Leiterplatten 7, 8 jeweils aus drei Schichten aufgebaut. Bei einer alternativen Ausführungsform weisen die beiden Leiterplatten 7, 8 jeweils nur zwei Schichten auf, nämlich eine elektrisch und thermisch leitfähige Schicht 7-1 und eine zweite elektrisch isolierende, thermisch leitfähige Schicht 7-2 bzw. 8-2. Diese Ausführungsform hat den Vorteil, dass auf eine Zwischenschicht, insbesondere die in Fig. 2 dargestellten Zwischenschichten 7-3, 8-3 verzichtet werden kann. Demgegenüber bietet die in Fig. 2 dargestellte Ausführungsform den Vorteil, dass die erste und zweite Schicht der beiden Leiterplatten beide aus einem elektrisch und thermisch leitfähigen Material hergestellt werden können, die durch eine elektrisch isolierende Schicht 7-3 bzw. 8-3 voneinander getrennt sind. Da elektrisch leitfähige Materialien in der Regel zugleich sehr gute thermische Leiter sind kann der Wärmestrom Q^{•}ₛ besser aus der Zelle an die Umgebung abgegeben werden im Vergleich zu der zweischichtigen Ausführungsform.

Bei einer möglichen Ausführungsform kann es sich bei dem elektrisch leitfähigen und thermisch leitfähigen Material, das insbesondere bei der elektrisch leitfähigen und thermisch leitfähigen Schicht 7-1 bzw. 8-1 der beiden Leiterplatten 7, 8 eingesetzt wird, um ein Metall handeln und insbesondere um Kupfer, Silber oder Gold. Die beiden Schichten 7-2, 8-2 der beiden Leiterplatten 7, 8 können beispielsweise aus einem elektrisch leitfähigen und thermisch leitfähigen Material, vorzugsweise einem Metall, beispielsweise Aluminium, oder einem thermisch leitenden, elektrisch isolierenden Material, beispielsweise einem Kunststoff, bestehen. Bestehen die beiden Schichten 7-2, 8-2 der beiden Leiterplatten 7, 8 aus einem elektrisch leitfähigen und thermisch leitfähigen Material wird zusätzlich eine elektrisch isolierende Zwischenschicht 7-3, 8-3 benötigt, die beispielsweise aus einem Kunststoff, beispielsweise Epoxidharz oder einem keramischen Material, beispielsweise Aluminiumoxid, bestehen kann. Die Kontaktelemente 4-1, 4-2 bzw. 5-1, 5-2 bestehen beispielsweise aus einem leitfähigen Elastomer, insbesondere Silikon. Die drei Schichten 7-1, 7-2, 7-3 der ersten Leiterplatte 7 und alle drei Schichten 8-1, 8-2, 8-3 der zweiten Leiterplatte 8 bestehen aus einem thermisch leitfähigen Material mit einer Leitfähigkeit von vorzugsweise mehr als 10 Watt pro KelvinMeter. Bei einer möglichen Ausführungsform werden die Energiespeicherzellen 1-i und deren flexible Kontaktelemente 4, 5 zwischen die beiden Leiterplatten 7, 8 geklemmt und dabei in der Tragstruktur 6 gehalten. Die mechanische Kraft, mit der die Energiespeicherzellen 1-i und die Kontaktelemente 4, 5 dabei eingeklemmt werden, kann vorzugsweise durch eine vordefinierte mechanische Vorspannung erzielt werden. Die beiden Leiterplatten 7, 8 können bei einer möglichen Ausführungsform durch eine geeignete mechanische Verbindung, beispielsweise durch Verschraubung oder Kleben, in der vorgespannten Position relativ zu den Energiespeicherzellen gehalten werden. Wie in Fig. 2 dargestellt, werden die Energiespeicherzellen, die sich an der Tragstruktur 6 befinden, an ihren beiden Polen über die flachen Kontaktelemente mit den beiden Leiterplatten 7, 8 elektrisch und thermisch verbunden. Die Schichten 7-1, 8-1 der beiden Leiterplatten 7, 8 sind für die Stromführung zwischen den einzelnen Energiespeicherzellen 1-i in dem Energiespeicherverbund vorgesehen. Das Basismaterial der Leiterplatten 7, 8 besteht aus einem Material mit hoher Wärmeleitfähigkeit ähnlich oder vergleichbar der Wärmeleitfähigkeit von Metall. Wenn das Basismaterial der beiden Leiterplatten 7, 8 elektrisch leitfähig ist, verfügt die Leiterplatte über eine elektrisch isolierende Zwischenschicht 7-3, 8-3, wie bei dem Ausführungsbeispiel gemäß Fig. 2 dargestellt. Über das Kontaktelement und die beiden Leiterplatten 7, 8 kann die Wärme mit einem geringen Wärmewiderstand aus dem Inneren der Energiespeicherzellen 1-i über die verschiedenen Schichten der Leiterplatten 7-8 geführt und nach außen an die Umgebung oder ein Kühlmedium, beispielsweise Luft oder Wasser, abgegeben werden. Der stirnseitige Wärmestrom Q^{•}ₛ fließt dabei vorzugsweise an den Stirnflächen der Energiespeicherzellen 1-1, 1-2 ab, wie in Fig. 2 dargestellt. Dadurch fließt auch Wärme aus dem Inneren bzw. Kern der Energiespeicherzellen 1-i ab, sodass der Temperaturgradient zwischen dem Inneren der Energiespeicherzelle und der Mantelfläche der Energiespeicherzelle minimiert wird. Die Minimierung des Temperaturgradienten führt dazu, dass die verschiedenen Energiespeicherzellen 1-1, 1-2 innerhalb des Energiespeichers weniger ungleichmäßig altern. Neben dem stirnseitigen Abfluss des Wärmestroms Q^{•}ₛ erfolgt vorzugsweise zusätzlich ein lateraler Wärmeabfluss aus den Energiespeicherzellen 1-i über deren Mantel an die wärmeleitfähige Tragstruktur 6, der als Wärmestrom Q^{•}ₘ in Fig. 2 angedeutet ist.

Bei der erfindungsgemäßen Anordnung erfolgt somit einerseits ein stirnseitiger Wärmeabfluss Q^{•}ₛ über die thermisch leitfähigen Kontaktelemente 4, 5 sowie ein Wärmeabfluss über die Mantelflächen der Energiespeicherzellen 1-i in die Tragstruktur 6 als Wärmestrom Q^{•}ₘ. Insgesamt wird hierdurch die Menge der abgeführten Wärme durch die beiden verschiedenen Wärmeströme Q^{•}ₛ, Q^{•}ₘ erhöht. Dies bewirkt, dass die Energiespeicherzellen innerhalb des Energiespeichers effizienter gekühlt werden. Dadurch kann auch die Packungsdichte der Energiespeicherzellen 1-i innerhalb eines elektrischen Energiespeichers deutlich erhöht werden. Die Kontaktflächen an den Stirnseiten der Energiespeicherzellen 1-i können bei einer möglichen Ausführungsform der gesamten Fläche der Stirnseite der jeweiligen Energiespeicherzelle 1-i entsprechen, sodass die Kontaktfläche sowohl für den elektrischen Strom I als auch für den Wärmestrom Q^{•}ₛ groß ist und der entsprechende elektrische thermische Widerstand klein ist.

Bei einer möglichen Ausführungsform der erfindungsgemäßen Vorrichtung sind die beiden äußeren Schichten 7-2, 8-2 der beiden Leiterplatten 7, 8 wesentlich dicker als die beiden übrigen Schichten der jeweiligen Leiterplatten 7,8 . Bei einer möglichen Ausführungsform sind die Außenschichten 7-2, 8-2 der beiden Leiterplatten 7, 8 mindestens 1 mm dick. Dies erlaubt es bei einer möglichen Ausführungsform an den Außenflächen der Außenschichten 7-2, 8-2 jeweils Ausnehmungen oder Rillen vorzusehen, um die Außenfläche beider Leiterplatten 7, 8 zu erhöhen. Die vorgesehenen Profilierungen können wie Kühlrippen wirken. Hierdurch wird der Wärmewiderstand der beiden thermisch leitfähigen Schichten 8-2, 7-2 vermindert, sodass der Wärmestrom Q^{•}ₛ zunimmt und somit mehr Wärme aus den Energiespeicherzellen 1-i abgeführt werden kann.

Bei einer weiteren möglichen Ausführungsform können in den thermisch leitfähigen Schichten 7-2, 8-2 auch Kühlkanäle vorgesehen werden, durch die ein Kühlmedium zur zusätzlichen Abkühlung fließt, sodass der thermische Widerstand der beiden Schichten 7-2, 8-2 zusätzlich vermindert wird.

Wie man in Fig. 2 erkennen kann, wird der elektrische Strom I von dem stirnseitigen Wärmestrom Q^{•}ₛ durch die Leiterplatten mithilfe der elektrisch und thermisch leitfähigen Schicht 7-1 bzw. 8-1 aufgetrennt, wobei der elektrische Strom I lateral zu einem elektrischen Kontakt abgeführt wird. An einer der beiden elektrisch und thermisch leitfähigen Schichten 7-1 bzw. 8-1 der beiden Leiterplatten 7, 8 sind jeweils elektrische Sicherungselemente 9-1, 9-2 vorgesehen, wie in Fig. 2 dargestellt. Bei einer möglichen Ausführungsform sind elektrische Sicherungselemente nur an einer der beiden Leiterplatten 7, 8 vorgesehen, wie bei dem in Fig. 2 dargestellten Ausführungsbeispiel. Bei einer weiteren möglichen Ausführungsform können elektrische Sicherungselemente auch auf der unteren Leiterplatte 8 der elektrisch und thermisch leitfähigen Schicht 8-1 vorgesehen sein. Die elektrischen Sicherungselemente 9-1, 9-2 bestehen beispielsweise aus dünnen Bonding-Drähten, einer Schmelzsicherung, einem PTC-Element, einem Halbleiterelement, oder einer sonstigen elektrischen Absicherung gegen Überströme. Die elektrischen Sicherungselemente 9-i können optional vorgesehen werden. Bei einer möglichen Ausführungsform ist für jede Energiespeicherzelle 1-i des Energiespeichers jeweils ein eigenes Sicherungselement vorgesehen. Alternativ können die Sicherungselemente 9-i auch für eine Gruppe von Energiespeicherzellen vorgesehen sein, beispielsweise eine Gruppe von parallel verschalteten Energiespeicherzellen. Die Sicherungselemente 9-i können beispielsweise aus PTC-Elementen bestehen. Diese trennen die elektrische Verbindung bei Überstrom. Eine weitere Möglichkeit ist die Absicherung der Energiespeicherzellen 1-i gegenüber zu hohen elektrischen Strömen I mithilfe von dünnen Bonding-Drähten. Diese Drähte schmelzen bei einem zu hohen Strom und lösen somit die elektrische Kontaktierung der jeweiligen Energiespeicherzelle innerhalb des Energiespeicherverbunds für diesen Notfall. Weiterhin können die elektrischen Sicherungselemente durch SMD-Bauteile gebildet sein, die auf die elektrisch und thermisch leitfähige Schicht 7-1 der Leiterplatte 7 aufgelötet werden. Weiterhin kann das elektrische Sicherungselement auch durch einen auf der Schicht 7-1 vorgesehenen eingeätzten Stromsteg gebildet werden. Dieser erhitzt sich bei zu hoher Strombelastung stark, was zum Aufschmelzen des Materials und einer Unterbrechung des elektrischen Kontaktes führt. Dieser Vorgang ist irreversibel, vergleichbar einer handelsüblichen Schmelzsicherung.

Bei der in Fig. 2 dargestellten Ausführungsform weist der Energiespeicher einen Verbund von Energiespeicherzellen 1-i auf, wobei die elektrische Verbindung der Energiespeicherzellen 1-i untereinander über eine Leiterplatte hergestellt wird, die mindestens eine elektrisch leitende Schicht und mindestens eine nicht leitende Schicht aufweist. Bei einer weiteren Ausführungsform wird die elektrische Verbindung der Energiespeicherzellen 1-i untereinander über Verbindungselemente aus Metall hergestellt, die in Kontakt mit den Kontaktelementen bzw. Anbindungselementen stehen, welche aus einem elastischen Kontaktierungsmaterial bestehen.

Bei der in Fig. 2 dargestellten Ausführungsform können bei einer Variante die Leiterplatten in ihren Leiterbahnen Verjüngungen aufweisen. Diese Verjüngungen werden ab einem gewissen Strom, der durch die jeweilige Verjüngung fließt, zerstört, sodass der elektrische Kontakt unterbrochen wird.

Ein Vorteil des Einsatzes von elastischen Kontaktelementen bzw. Anbindungselementen besteht darin, dass deren elastisches Kontaktierungsmaterial in das Energiespeichersystem von außen eingebrachte mechanische Schwingungen dämpft und die einzelnen Energiespeicherzellen geringere Beschleunigungen erfahren.

Bei der in Fig. 2 dargestellten Ausführungsform liegen die beiden Pole 2-i, 3-i der Energiespeicherzelle 1-i einander gegenüber. Bei einer anderen Ausführungsform können die beiden Pole 2-i, 3-i der Energiespeicherzelle 1-i auf einer Seite liegen.

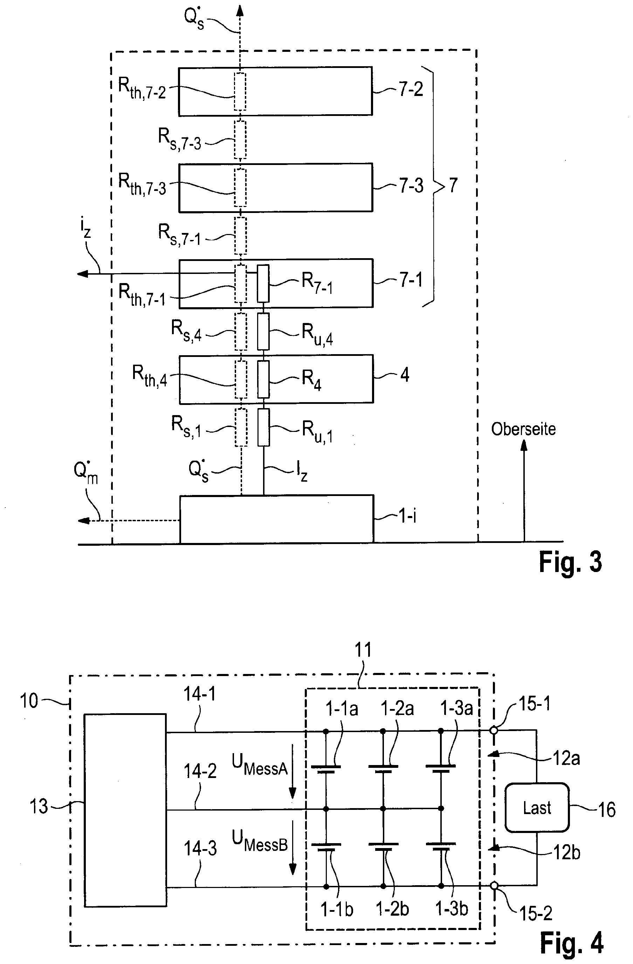

Fig. 3 zeigt ein elektrisches und thermisches Ersatzschaltbild zur Darstellung eines elektrischen Stromflusses und eines thermischen Wärmeflusses ausgehend von einer Energiespeicherzelle 1-i an die Umgebung. Der Wärmestrom Q^{•}ₘ fließt, wie in Fig. 3 dargestellt, über die Mantelfläche der Energiespeicherzelle 1-i ab. Der Wärmestrom Q^{•}ₛ fließt über die Stirnfläche der Energiespeicherzelle 1-i über das thermisch leitfähige Kontaktelement 4 sowie die thermisch leitfähigen Schichten 7-1, 7-3, 7-2 der oberen Leiterplatte 7 an die Umgebung ab. Bei dem in Fig. 3 dargestellten Beispiel stellt Rₛ einen thermischen Übergangswiderstand und Rᵤ einen elektrischen Übergangswiderstand Rₜₕ dar und stellt den thermischen Widerstand des Kontaktelementes 4 bzw. einer Schicht 7-1, 7-2, 7-3 der oberen Leiterplatte 7 dar. Wie man aus Fig. 3 erkennen kann, fließt elektrischer Strom I der Energiespeicherzelle von der elektrisch und thermisch leitfähigen Schicht 7-1 der oberen Leiterplatte 7 ab und wird dort von dem Wärmestrom Q^{•}ₛ getrennt. Mithilfe der erfindungsgemäßen Anordnung wird der Wärmestrom Q^{•}ₘ der aus der elektrischen Speicherzelle 1-i über deren Mantelfläche oder deren Stirnfläche fließt, bei einem vorgegebenen elektrischen Strom aus der Zelle maximiert, um die thermische Belastung der jeweiligen Energiespeicherzelle 1-i möglichst gering zu halten. Wie man in Fig. 3 erkennen kann, wird der Wärmestrom Q^{•} entweder über die Mantelfläche M oder über die Stirnfläche S oder über beide, d.h. sowohl Mantelfläche und Stirnfläche, bei der erfindungsgemäßen Anordnung abgeführt. Die Summe der thermischen Übergangswiderstände Rₛ und der thermischen Widerstände Rₜₕ wird zur Maximierung des Wärmestromes vorzugsweise minimiert. Der Hauptteil der thermischen Energie entsteht im Inneren der Energiespeicherzelle 1-i. Durch Wärmeabfuhr über die Stirnflächen bzw. Pole der Energiespeicherzellen 1-i kann die Wärme aus dem Inneren der Energiespeicherzelle 1-i besser nach außen geführt werden, wenn die Summe der thermischen Widerstände geringer ist, d.h. die Summe der thermischen Widerstände vom Inneren zum Pol bzw. der Stirnfläche der Energiespeicherzelle geringer ist als der thermische Widerstand vom Inneren der Energiespeicherzelle zu deren Mantelfläche.

Die Fig. 7A, 7B, 7C zeigen verschiedene Ausführungsvarianten von Energiespeicherzellen 1-i. Fig. 7A zeigt eine zylindrische Energiespeicherzelle 1-i mit zwei gegenüberliegenden Polen 2-i, 3-i. Fig. 7B zeigt eine prismatische bzw. quaderförmige Energiespeicherzelle 1-i mit zwei Polen 2-i, 3-i auf einer Stirnfläche. Fig. 7C zeigt eine Energiespeicherzelle 1-i in Form einer Tasche bzw. Beutels, die relativ flach ausgebildet ist und die Pole 2-i, 3-i an einer Stirnseite hat.

Die Anbindungs- bzw. Kontaktelemente 4-i, 5-i können auch für die Verbindung und Anbindung von zwei stromführenden Leitern verwendet werden, wobei Ströme mit einer Stromdichte von mehr als 0,05 A/mm² übertragen werden können. Somit eignet sich ein Anbindungselement auch zur Übertragung großer elektrischer Leistungen, beispielsweise auch in einem Stecksystem oder in einer Lüsterklemme. Die Erfindung schafft somit auch ein Verbindungssystem zur Verbindung zweier elektrischer Leiter, wobei sich zwischen den beiden elektrischen Leitern ein elektrisch leitendes Elastomer befindet. Die beiden elektrischen Leiter können dabei aus unterschiedlichen Materialien bestehen, beispielsweise aus einer Kupfer- oder Aluminiumlegierung.

Fig. 4 zeigt ein Ausführungsbeispiel einer erfindungsgemäßen Energiespeichervorrichtung 10, die einen Energiespeicher 11 enthält. Der Energiespeicher 11 besteht aus mehreren seriell verschalteten Energiespeicherzellengruppen 12 A, 12 B, die jeweils aus mehreren parallel verschalteten Energiespeicherzellen 1-i bestehen. Die Energiespeicherzellengruppen 12A, 12B weisen jeweils drei parallel verschaltete Energiespeicherzellen 1-i auf, wie in Fig. 4 dargestellt. So weist die erste Energiespeicherzellengruppe 12A parallel verschaltete Energiespeicherzellen 1-1a, 1-2a, 1-3a auf und die zweite Energiespeicherzellengruppe 12B parallel verschaltete Energiespeicherzellen 1-1b, 1-2b, 1-3b. Die Anzahl der parallel verschalteten Energiespeicherzellen 1-i innerhalb einer Energiespeicherzellengruppe kann variieren. Eine Energiespeicherzellengruppe kann mehr als zwei Energiespeicherzellen umfassen. Weiterhin kann die Anzahl der seriell verschalteten Energiespeicherzellengruppen 12A, 12B variieren, wobei beispielsweise mehr als zwei Energiespeicherzellengruppen seriell hintereinander geschaltet werden können. Die Pole der Energiespeicherzellen 1-i sind jeweils über ein elektrisch und thermisch leitfähiges Kontaktelement mit einer Leiterplatte 7, 8 verbunden, die zur Trennung eines von der jeweiligen Energiespeicherzelle 1-i über das Kontaktelement erhaltenen elektrischen Stromes I von einem über das Kontaktelement erhaltenen Wärmestrom Q^{•} vorgesehen ist. Die parallel verschalteten Energiespeicherzellengruppen 12A, 12B des Energiespeichers 11 sind jeweils über Senseleitungen, die auf der Leiterplatte vorgesehen sind, mit einer elektronischen Überwachungseinheit 13 verbunden. Bei dem in Fig. 4 dargestellten einfachen Ausführungsbeispiel sind zwei Energiespeicherzellengruppen 12A, 12B des Energiespeichers 11 über drei Senseleitungen 14-1, 14-2, 14-3 mit der elektronischen Überwachungseinheit 13 verbunden, die ein Batteriemanagementsystem BMS darstellt. Die Anzahl der Senseleitungen 14-i entspricht der Anzahl von seriell verschalteten Energiespeicherzellengruppen plus 1. Die Senseleitungen 14-i verlaufen innerhalb der Leiterplatten 7, 8, zwischen denen Energiespeicherzellen 1-i einer Energiespeicherzellengruppe geklemmt sind. Durch den Verlauf der Senseleitungen innerhalb der Leiterplatten 7, 8 ist keine separate Kontaktierung der Senseleitungen 14-i mit den Energiespeicherzellen und eine Führung entsprechender Sensekabel notwendig. Dadurch kann der Aufwand zur Herstellung der Energiespeichervorrichtung 10, wie sie in Fig. 4 dargestellt ist, erheblich vermindert werden. Die Führung der Senseleitungen 14-i innerhalb der Leiterplatten 7, 8 kann durch eine entsprechende Gestaltung beim Platinenlayout gewährleistet werden. Dadurch, dass die Zellkontaktierung auf einer Leiterplatte erfolgt, können die Senseleitungen einfach beim Platinenlayout berücksichtigt werden. Dies bedeutet, dass eine Kontaktierung von Sens- bzw. Sensorleitungen nicht notwendig ist und direkt über die Leiterplatte 7, 8 die Sensorleitung 14-i zu der elektrischen Überwachungseinheit 13 geführt werden kann.
Gleiches gilt für die Sensorleitungen wie beispielsweise für Leitungen von Temperatursensoren.
Die elektrische Energiespeichervorrichtung 10 weist Anschlussklemmen 15-1, 15-2 zum Anschluss einer elektrischen Last 16 auf. Bei der Last 16 kann es sich beispielsweise um einen Elektromotor oder einen Wechselrichter eines Fahrzeuges handeln. Für jede Energiespeicherzelle 1-i der Energiespeichervorrichtung 10 kann ein eigenes elektrisches Sicherungselement zur Überstromabsicherung beispielsweise in der ersten Schicht der Leiterplatten 7, 8 vorgesehen sein. Dadurch können weitere gefährliche Prozesse, die bis zum Brennen einer Zelle führen können, die sich in einem Fehlerfall einer Energiespeicherzelle ergibt, zuverlässig verhindert werden. Zum Beispiel ein interner Kurzschluss innerhalb einer Energiespeicherzelle führt dazu, dass das elektrische Sicherungselement den Stromfluss unterbricht, sodass zuverlässig verhindert wird, dass dazu parallel verschaltete Energiespeicherzellen über die defekte Energiespeicherzelle kurzgeschlossen werden. Dadurch wird eine Kettenreaktion verhindert, die sogar zu einem Brand der Energiespeichervorrichtung führen könnte. Zudem wird die Funktionsfähigkeit des Energiespeichers erhalten.

Die Kontaktierung und Aufteilung der Energiespeicherzellen 1-i in parallele und serielle Stränge innerhalb des Energiespeichers 11 erfolgt mithilfe der Leiterplatten 7, 8, die zudem als Gehäuse und zusätzlich als Kühlelemente dienen. Auf der Kontaktierungsplatine kann für jede Energiespeicherzelle 1-i einzeln ein Sicherungselement vorgesehen werden, das wie eine Art elektrischer Sicherung für jede einzelne Energiespeicherzelle 1-i dient. Tritt in einer Energiespeicherzelle 1-i ein Fehler, beispielsweise ein elektrischer Kurzschluss, auf, löst dieses Sicherungselement aus und schaltet die betroffene Energiespeicherzelle weg. Dadurch bleibt die Energiespeichervorrichtung 10, beispielsweise ein Akkumodul, stets in einem sicheren Betriebszustand.

Die elektronische Überwachungseinheit 13 kann über die Senseleitungen zudem Spannungen der parallel verschalteten Energiespeicherzellen 1-i einer Energiespeicherzellengruppe 12A, 12B kontinuierlich überwachen und den Ausfall einer Energiespeicherzelle, beispielsweise durch internen Kurzschluss, anhand eines plötzlichen Spannungseinbruchs an der Senseleitung 14-i detektieren und entsprechend reagieren.

Bei einer möglichen Ausführungsform sind zusätzlich Schaltelemente in dem Energiespeicher 11 vorgesehen, die durch die elektronische Überwachungseinheit 13 im Reaktion auf detektierte Fehler geschaltet werden. Bei dieser Ausführungsform können neben den elektrischen Sicherungselementen 9-i Schalter geschaltet werden, sodass die fehlerhaften Energiespeicherzellen 1-i deaktiviert werden, sobald sie von einem Fehler betroffen sind.

Bei einer möglichen Ausführungsform wird die von den Energiespeicherzellen oder einer Energiespeicherzellengruppe des Energiespeichers 12 abgegebene Wärme von mindestens einem zugehörigen Temperatursensor erfasst. Der Temperatursensor kann ebenfalls an den Leiterplatten 7, 8 vorgesehen sein. Der Temperatursensor meldet die erfasste Temperatur der jeweiligen Energiespeicherzelle bzw. Energiespeicherzellengruppe der elektronischen Überwachungseinheit 13. Da bei der erfindungsgemäßen Anordnung die Wärme der Energiespeicherzellen 1-i über die Pole abgeführt wird, können diese Temperatursensoren in der Kontaktierungsplatine bzw. Leiterplatte vorgesehen werden und müssen nicht im Inneren des Akkumoduls bzw. Energiespeichers untergebracht werden. Dadurch wird der Fertigungsaufwand zusätzlich vermindert.

Bei einer weiteren möglichen Ausführungsform der erfindungsgemäßen Energiespeichervorrichtung 10 können zusätzlich Ausgleichswiderstände zur Umwandlung von überschüssiger Ladung der Energiespeicherzellen 1-i des Energiespeichers 11 in Wärme vorgesehen sein. Die Ausgleichswiderstände geben die von ihnen erzeugte Wärme an die Leiterplatten 7, 8 ab und werden über die Überwachungseinheit 13 angesteuert. Die Ausgleichswiderstände sind zum Ausgleichen bzw. Balancen der einzelnen Energiespeicherzellen hinsichtlich unterschiedlicher elektrischer Ladungen vorgesehen. Die Belastungsunterschiede sowie eine unterschiedliche Alterung der Energiespeicherzelle n 1-i können innerhalb des Energiespeichers 11 dazu führen, dass die in Serie geschalteten Energiespeicherzellen 1-i unterschiedliche Verluste aufweisen. Dadurch variiert die elektrische Ladung, die für die einzelnen seriell geschalteten Zellen zur Verfügung gestellt werden kann. Die Ladungsunterschiede werden mittels eines sogenannten Balancing mithilfe von Ausgleichswiderständen ausgeglichen. Dabei wird überschüssige Ladung von einzelnen Energiespeicherzellen 1-i über Ausgleichswiderstände in Wärme umgewandelt. Da bei herkömmlichen Energiespeichern die Wärmeabfuhr nur sehr begrenzt erfolgen kann, kann es vorkommen, dass bei herkömmlichen Energiespeichern der Balancing- bzw. Ausgleichsvorgang der aktuellen Belastung des Energiespeichers nicht nachkommt und dadurch die Leistungsabgabe bzw. Leistungsaufnahme gedrosselt werden muss.

Bei dem erfindungsgemäßen Energiespeicher 11 ist die Überwachungseinheit vorzugsweise direkt an dem Energiespeicher 11 angebracht. Die Wärme der Ausgleichswiderstände kann damit einfach an die Kontaktierungs- bzw. Leiterplatine 7, 8 abgegeben werden. Dadurch wird die Balancing-Leistung bei der erfindungsgemäßen Energiespeichervorrichtung 10 deutlich erhöht und hat dadurch keinen Einfluss auf die Dynamik der elektrischen Belastung der Energiespeichervorrichtung 10.

Die von den Ausgleichswiderständen abgegebene Wärme wird vorzugsweise über die aus wärmeleitfähigen Schichten bestehenden Leiterplatten 7, 8 gleichmäßig zur Vorheizung des Energiespeichers 11 verteilt. Die Vorheizung erfolgt vorzugsweise bei niedrigen Umgebungstemperaturen. Bei tiefen Temperaturen der Umgebung nimmt die entnehmbare Leistung und Energie der Energiespeicherzellen 1-i ab. Daher wird bei dieser bevorzugten Ausführungsform bei tiefen Temperaturen der Energiespeicher 11 vorgewärmt. Im Gegensatz zu herkömmlichen Energiespeichern, bei denen die Energiespeicher durch eine eigene Heizung vorgewärmt werden, erfolgt bei dem erfindungsgemäßen Energiespeicher 11 die Vorheizung mittels der Ausgleichswiderstände, die für den Ladungsausgleich vorgesehen sind. Da die Temperaturverteilung auf die Kontaktierungs- bzw. Leiterplatten 7, 8 sehr gut ist, wird die erzeugte Wärme der Balancing- bzw. Ausgleichswiderstände gut auf alle Energiespeicherzellen 1-i des Energiespeichers 11 verteilt. Damit wird der Energiespeicher 11 insbesondere bei niedrigen Umgebungstemperaturen automatisch vorgeheizt, wodurch die entnehmbare Leistung und Energie der Energiespeicherzellen 1-i erhöht wird.

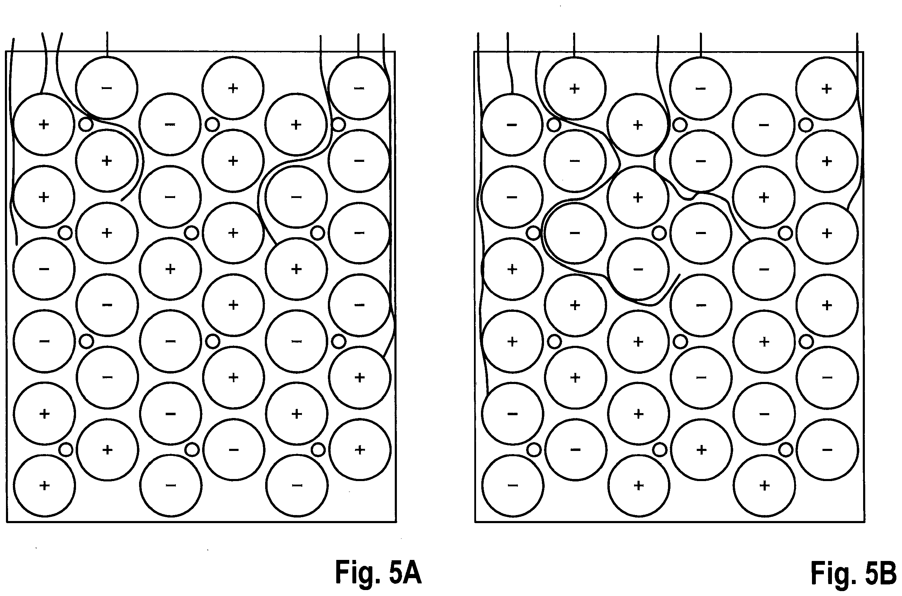

Fig. 5A, 5B zeigt eine mögliche Polanordnung auf einer Leiterplatte, die bei der erfindungsgemäßen Vorrichtung bzw. Energiespeichervorrichtung eingesetzt werden können.

Fig. 5A zeigt beispielsweise die Polanordnung einer oberen Leiterplatte 7 auf der den Energiespeicherzellen 1-i zugewandten Seite.

Fig. 5B zeigt ein entsprechende Polanordnung der unteren Leiterplatte 8 auf der den Energiespeicherzellen 1-i zugewandten Seite.

Durch eine geeignete Polanordnung kann eine gleichmäßige Wärmeverteilung in den eventuell vorhandenen Parallelschaltungen sowie zwischen den Leiterplatten 7,8 unterstützt werden.

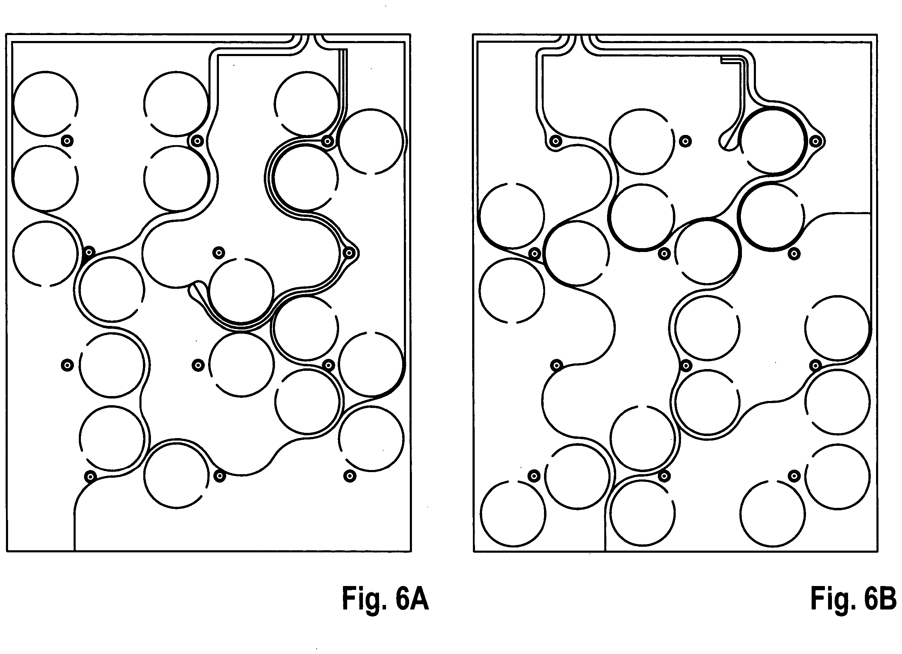

Die Figuren 6A, 6B zeigen ein mögliches Platinenlayout der Leiterplatten für die Polanordnung mit darin integrierten Sens- bzw. Sensorleitungen zum Anschluss an die elektronische Überwachungseinheit 13 sowie zum Anschluss von Temperatursensoren. Zusätzlich sind Bohrungen für Schrauben zur Montage des elektrischen Energiespeichers 11 dargestellt.

Mit der erfindungsgemäßen Kontaktierungsvorrichtung kann eine optimale lange Lebensdauer des Energiespeichers 11 und eine hohe Effizienz bei der Nutzung des Energiespeichers 11 erreicht werden. Mit der erfindungsgemäßen Vorrichtung ist es möglich, die Temperatur des gesamten Energiespeichers 11 in einem optimalen Temperaturbereich zu halten und die Temperaturgradienten innerhalb der Energiespeicherzellen 1-i zu minimieren. Die erfindungsgemäße Vorrichtung erlaubt eine thermische Anbindung von Energiespeicherzellen bzw. Batteriezellen in einem Energiespeicherverbund, wobei ein Wärmestrom und ein elektrischer Strom von den Energiespeicherzellen 1-i über elektrisch leitfähige Kontaktflächen der Batteriezellen nach außen geführt wird. Die Sicherung der Energiespeicherzellen 1-i gegen elektrische Überströme erfolgt mithilfe von Sicherungselementen, über die kein Wärmestromfluss erfolgt. Über den Pol der Energiespeicherzelle wird Wärme aus dem Inneren der Energiespeicherzelle 1-i abgeleitet. Darüber hinaus kann Wärme von der Außenhaut bzw. dem Mantel der Energiespeicherzelle 1-i abgeleitet werden. Hierdurch wird eine effiziente Kühlung realisiert, wobei zusätzlich ein niedriger Temperaturgradient vom Inneren zum Äußeren der Energiespeicherzelle 1-i erreicht wird. Ein Vorteil der erfindungsgemäßen Kontaktierungsvorrichtung besteht darin, dass sie eine große Kontaktfläche bietet und der elektrische und thermische Widerstand reduziert wird. Die Flexibilität der Kontaktelemente dient dazu, dass mechanische Schwingungen gedämpft werden. Zudem können Materialunebenheiten ausgeglichen und der Montageprozess vereinfacht werden. Dies ist insbesondere von Bedeutung, wenn die erfindungsgemäße elektrische Energiespeichervorrichtung 10 innerhalb eines Fahrzeuges vorgesehen wird. Diese Form der Kontaktierung kann im Gegensatz zu einer starren Verbindung der Kontaktierung auch nicht durch Schwingungen beschädigt werden.

Bei einer möglichen Ausführungsform kann die elektrische Überwachungseinheit 13 mithilfe der Senseleitungen 14-i den aufgetretenen Fehler bzw. die fehlerhafte Energiespeicherzelle 1-i einer höheren Softwareschicht oder einem Fahrer melden. Die erfindungsgemäße Anordnung bzw. Kontaktierungsvorrichtung stellt ein löt- und schweißfreies Kontaktierungskonzept für multifunktionale Leiterplatten dar, so dass der Fertigungsaufwand bei der Herstellung von Energiespeichern 11 signifikant vermindert wird. Die elastischen Kontaktelemente werden sandwichartig mit den Leiterplatten 7, 8 oberflächenschlüssig verbunden. Über die verschiedenen Schichten der Leiterplatten 7, 8 kann die Stromführung und ein Abwärmetransport erfolgen. Vorteilhafterweise trägt dieser Materialverbund auch zur verbesserten Statik des Energiespeicherzellenpacks bei und wirkt sich zudem positiv auf die Packungsdichte aus.

Mit Hilfe der erfindungsgemäßen Kontaktierungsvorrichtung kann ein aufwendiges Zusammenschalten vieler vergleichsweise kleiner Energiespeicherzellen zu Energiespeicherverbünden entfallen, was sich insbesondere aufgrund der niedrigen Entladeströme bei kleineren Energiespeicherzellen vorteilhaft auf die Brandsicherheit des Energiespeichers und somit des entsprechenden Elektrofahrzeugs auswirkt. Durch die erhöhte Lebensdauer und den höheren Wirkungsgrad des erfindungsgemäßen elektrischen Energiespeichers 11 werden die elektrischen Verluste gering gehalten und zudem die Temperatur des Energiespeichers 11 in einem idealen Temperaturarbeitsbereich gehalten. Die Kontaktflächen an den negativen und positiven Polen der Energiespeicherzelle 1-i gewährleisten eine effiziente Ableitung von Wärme und erlauben eine verlustarme elektrische und thermische Energieübertragung. An dem Energiespeicher 11 kann ein Elektromotor eines Fahrzeugs angeschlossen sein, dessen Reichweite aufgrund der hohen Effizienz des Energiespeichers 11 hoch ist.

Die erfindungsgemäße Energiespeichervorrichtung 10 kann in verschiedene Fahrzeuge oder tragbare Geräte eingebaut werden. Die erfindungsgemäße Energiespeichervorrichtung 10 kann beispielsweise auch als Energiequelle für eine tragbare Vorrichtung, insbesondere für einen tragbaren Computer oder mobiles Endgerät, dienen, insbesondere für ein mobiles Telefon oder dergleichen.

Bei einer möglichen Ausführungsform der erfindungsgemäßen Energiespeichervorrichtung 10 ist die Energiespeichervorrichtung 10 modular aufgebaut, sodass bei dieser Ausführungsform verschiedene Energiespeicherzellengruppen 12A, 12B von parallel verschalteten Energiespeicherzellen modular zusammengesetzt werden können. Weiterhin können bei einer möglichen Ausführungsform mechanische Verbindungen an den Leiterplatten 7, 8 vorgesehen sein und ein derartiges modulares Zusammensetzen der Energiespeicherzellengruppen 12A, 12B erlauben.

## Patentansprüche

1. Energiespeichervorrichtung (10), die einen Energiespeicher (11) enthält, wobei Energiespeicherzellen (1-i) des Energiespeichers (11) jeweils an ihren Polen (2-i, 3-i) über ein elektrisch und thermisch leitfähiges flaches Kontaktelement (4-i, 5-i) aus einem elastischen Material mit einer Leiterplatte (7, 8) verbunden sind, die zur Trennung eines von der jeweiligen Energiespeicherzelle (1-i) über das Kontaktelement (2-i, 3-i) fließenden elektrischen Stromes (I) von einem über das Kontaktelement (2-i, 3-i) erhaltenen Wärmestrom (Q^{•}ₛ) vorgesehen ist, wobei das flache, aus einem elastischen Material bestehende Kontaktelement (4-i, 5-i) seine elastische Verformung aus der Änderung einer Längenausdehnung in Richtung senkrecht zu den Kontaktoberflächen der Pole (2-i, 3-i) bezieht,
wobei die Leiterplatten (7, 8) jeweils eine elektrisch leitende und wärmeleitende erste Schicht (7-1, 8-1) aufweisen, die an dem Kontaktelement (4-i, 5-i) anliegt,
wobei die erste Schicht (7-1, 8-1) der Leiterplatte (7, 8) einen über das Kontaktelement (4-i, 5-i) fließenden elektrischen Strom (I) lateral abführt und einen über das flache Kontaktelement (4-i, 5-i) fließenden Wärmestrom (Q^{•}s) an eine zweite wärmeleitende Schicht (7-2, 8-2) der Leiterplatte (7, 8) überträgt, welche den von der ersten Schicht (7-1, 8-1) der Leiterplatte (7, 8) empfangenen Wärmestrom (Q^{•}s) an eine Umgebung oder an ein Kühlmedium abgibt, und
wobei die zweite Schicht (7-2, 8-2) der Leiterplatte (7, 8) elektrisch leitfähig ist und durch eine elektrisch isolierende Zwischenschicht (7-3, 8-3) der Leiterplatte (7, 8) von der elektrisch leitfähigen ersten Schicht (7-1, 8-1) der Leiterplatte (7, 8) getrennt ist,
wobei die elektrisch isolierende Zwischenschicht (7-3, 8-3) der Leiterplatte (7, 8) aus einem thermisch leitfähigen Material besteht,
wobei das an beiden Polen (2-i, 3-i) der elektrischen Energiespeicherzelle (1-i) jeweils vorgesehene flache Kontaktelement (4-i, 5-i) zwischen dem jeweiligen Pol (2-i, 3-i) der elektrischen Energiespeicherzelle (1-i) und der jeweiligen Leiterplatte (7, 8) vorgesehen ist,
wobei das elastische Material der flachen Kontaktelemente (4-i, 5-i) ein elastisches Kontaktierungsmaterial ist, das aus einer Mischung aus Elastomer und Metallpartikeln oder einem leitfähigen Elastomer besteht und zwei elektrische Leiter elektrisch und thermisch verbindet, ohne dass sich diese elektrischen Leiter berühren, wobei die Oberfläche des jeweiligen Pols (2-i, 3-i) oder eines elektrischen Leiters ganz oder teilweise vor Kontakt mit Feuchtigkeit geschützt wird.

2. Vorrichtung nach Anspruch 1,
wobei die elektrischen Energiespeicherzellen (1-i) an ihren beiden Polen (2-i, 3-i) zwischen zwei Leiterplatten (7, 8) eingeklemmt sind.

3. Vorrichtung nach Anspruch 1 oder 2,
wobei die elastischen flachen Kontaktelemente (4-i, 5-i) sandwichartig mit den Leiterplatten (7, 8) oberflächenschlüssig verbunden sind.

4. Energiespeichervorrichtung nach einem der vorangehenden Ansprüche 1 bis 3,
wobei die flachen Kontaktelemente (4-i, 5-i) fest mit der jeweiligen Energiespeicherzelle (1-i) oder mit der jeweiligen Leiterplatte (7, 8) fest verbunden sind.

5. Energiespeichervorrichtung nach einem der vorangehenden Ansprüche 1 bis 3,
wobei die flachen Kontaktelemente (4-i, 5-i) durch eine pastöse, aushärtende Masse gebildet sind, die in einem Zwischenraum zwischen der jeweiligen Energiespeicherzelle (1-i) und der jeweiligen Leiterplatte (7, 8) eingebracht wird.

6. Vorrichtung nach einem der vorangehenden Ansprüche 1 bis 5,
wobei die elektrische und wärmeleitende erste Schicht (7-1, 8-1) der Leiterplatte (7, 8) aufgrund einer geeigneten Polanordnung auch eine laterale Wärmeabfuhr ermöglicht.

7. Vorrichtung nach einem der vorangehenden Ansprüche 1 bis 6,
wobei in oder auf der elektrisch und thermisch leitfähigen ersten Schicht (7-1, 8-1) der Leiterplatte (7, 8) elektrische Sicherungselemente (9-i) oder Verjüngungen zur Überstromabsicherung vorgesehen sind.

8. Vorrichtung nach einem der vorangehenden Ansprüche 1 bis 7,
wobei der elektrische Energiespeicher (11) mehrere Energiespeicherzellen (1-i) aufweist, die in einer Energiespeicherzellengruppe (12A, 12B) parallel verschaltet sind,
wobei mehrere Energiespeicherzellengruppen (12A, 12B), die jeweils parallel verschaltete Energiespeicherzellen (1-i) aufweisen, seriell in dem Energiespeicher (11) verschaltet sind und wobei die Energiespeicherzellen (1-i) chemische oder physikalische Speichersysteme umfassen.

9. Vorrichtung nach Anspruch 8,
wobei die seriell verschalteten Energiespeicherzellengruppen (12A, 12B) des Energiespeichers (11) jeweils über Senseleitungen (14-i), die in den Leiterplatten (7, 8) vorgesehen sind, mit einer elektronischen Überwachungseinheit (13) verbunden sind, welche eine an der Energiespeicherzellengruppe (12A, 12B) des Energiespeichers (11) jeweils anliegende elektrische Spannung überwacht.

10. Vorrichtung nach einem der vorangehenden Ansprüche 8 oder 9,
wobei für jede Energiespeicherzellengruppe (12A, 12B) oder für jede einzelne Energiespeicherzelle (1-i) einer Energiespeicherzellengruppe (12A, 12B) ein elektrisches Sicherungselement (9-i) zur Strombegrenzung in oder auf der ersten Schicht (7-1, 8-1) der Leiterplatte (7, 8) vorgesehen ist.

11. Vorrichtung nach Anspruch 9 oder 10,
wobei die von einer Energiespeicherzelle (1-i) oder von einer Energiespeicherzellengruppe (12A, 12B) des Energiespeichers (11) abgegebene Wärme von mindestens einem zugehörigen Temperatursensor erfasst wird, der an eine der Leiterplatten (7, 8) vorgesehen ist und die erfasste Temperatur über Sensorleitungen auf der Leiterplatte (7,8) an die elektronische Überwachungseinheit (13) des Energiespeichers (11) meldet.

12. Vorrichtung nach einem der vorangehenden Ansprüche 9 bis 11,
wobei die Leitungen für den Nutzstrom, die Sensorleitungen und die Senseleitungen (14-i) über ein und dieselbe Leiterplatte (7, 8) geführt werden.

13. Vorrichtung nach einem der vorangehenden Ansprüche 1 bis 12,
wobei Ausgleichswiderstände zur Umwandlung von überschüssiger Ladung von Energiespeicherzellen (1-i) des Energiespeichers (11) in Wärme vorgesehen sind und die von ihnen erzeugte Wärme über das elektrisch und thermisch leitfähige Kontaktelemente(4-i, 5-i) an die Leiterplatten (7, 8) abgeben,
wobei die von den Ausgleichswiderständen abgegebene Wärme über die aus wärmeleitfähigen Schichten bestehenden Leiterplatten (7, 8) gleichmäßig zur Vorheizung des Energiespeichers (11), insbesondere bei niedrigen Umgebungstemperaturen, verteilt wird.

14. Fahrzeug mit einer Energiespeichervorrichtung (10) nach einem der vorangehenden Ansprüche 1 bis 13.

## Claims

1. Energy storage device (10) which contains an energy store (11), wherein energy storage cells (1-i) of the energy store (11) are each connected at their poles (2-i, 3-i) to a printed circuit board (7, 8) via an electrically and thermally conductive flat contact element (4-i, 5-i) made from an elastic material, which printed circuit board is provided to separate an electric current (I), flowing from the respective energy storage cell (1-i) via the contact element (2-i, 3-i), from a heat flow (Q^{•}ₛ) received via the contact element (2-i, 3-i), wherein the flat contact element (4-i, 5-i) consisting of elastic material draws its elastic deformation from the change in a longitudinal extension in a direction perpendicular to the contact surfaces of the poles (2-i, 3-i),
wherein the printed circuit boards (7, 8) each comprise an electrically conductive and heat-conducting first layer (7-1, 8-1) which lies against the contact element (4-i, 5-i), wherein the first layer (7-1, 8-1) of the printed circuit board (7, 8) laterally discharges an electric current (I) flowing via the contact element (4-i, 5-i) and transfers a heat flow (Q^{•}s) flowing via the flat contact element (4-i, 5-i) to a second heat-conducting layer (7-2, 8-2) of the printed circuit board (7, 8) which outputs the heat flow (Q^{•}s) received from the first layer (7-1, 8-1) of the printed circuit board (7, 8) to a surrounding area or to a cooling medium, and
wherein the second layer (7-2, 8-2) of the printed circuit board (7, 8) is electrically conductive and is separated from the electrically conductive first layer (7-1, 8-1) of the printed circuit board (7, 8) by an electrically insulating intermediate layer (7-3, 8-3) of the printed circuit board (7, 8),
wherein the electrically insulating intermediate layer (7-3, 8-3) of the printed circuit board (7, 8) consists of a thermally conductive material,
wherein the flat contact element (4-i, 5-i) respectively provided at both poles (2-i, 3-i) of the electric energy storage cell (1-i) is provided between the respective pole (2-i, 3-i) of the electric energy storage cell (1-i) and the respective printed circuit board (7, 8),
wherein the elastic material of the flat contact elements (4-i, 5-i) is an elastic contacting material which consists of a mixture of elastomer and metal particles or of a conductive elastomer and electrically and thermally connects two electric conductors without these electric conductors touching each other, wherein the surface of the respective pole (2-i, 3-i) or of an electric conductor is completely or partially protected against contact with moisture.

2. Device as claimed in claim 1, wherein the electric energy storage cells (1-i) are clamped in at their two poles (2-i, 3-i) between two printed circuit boards (7, 8).

3. Device as claimed in claim 1 or 2, wherein the elastic flat contact elements (4-i, 5-i) are connected in a surface-bonded and sandwich-like manner to the printed circuit boards (7, 8).

4. Energy storage device as claimed in any one of the preceding claims 1 to 3, wherein the flat contact elements (4-i, 5-i) are fixedly connected to the respective energy storage cell (1-i) or fixedly connected to the respective printed circuit board (7, 8).

5. Energy storage device as claimed in any one of the preceding claims 1 to 3, wherein the flat contact elements (4-i, 5-i) are formed by a pasty curable compound which is introduced in an intermediate space between the respective energy storage cell (1-i) and the respective printed circuit board (7, 8).

6. Device as claimed in any one of the preceding claims 1 to 5, wherein the electrically conductive and heat-conducting first layer (7-1, 8-1) of the printed circuit board (7, 8) also renders possible a lateral discharge of heat by virtue of a suitable pole arrangement.

7. Device as claimed in any one of the preceding claims 1 to 6, wherein electric safety elements (9-i) or tapered sections for overload protection are provided in or on the electrically and thermally conductive first layer (7-1, 8-1) of the printed circuit board (7, 8).

8. Device as claimed in any one of the preceding claims 1 to 7, wherein the electric energy store (11) comprises a plurality of energy storage cells (1-i) which are connected in parallel in an energy storage cell group (12A, 12B),
wherein a plurality of energy storage cell groups (12A, 12B), which each comprise energy storage cells (1-i) connected in parallel, are connected in series in the energy store (11), and wherein the energy storage cells (1-i) comprise chemical or physical storage systems.

9. Device as claimed in claim 8, wherein the series-connected energy storage cell groups (12A, 12B) of the energy store (11) are connected to an electronic monitoring unit (13) in each case via sense lines (14-i) which are provided in the printed circuit boards (7, 8), which monitoring unit monitors an electric voltage applied at each energy storage cell group (12A, 12B) of the energy store (11).

10. Device as claimed in any one of the preceding claims 8 or 9, wherein for each energy storage cell group (12A, 12B) or for each individual energy storage cell (1-i) of an energy storage cell group (12A, 12B) an electric safety element (9-i) for current limitation is provided in or on the first layer (7-1, 8-1) of the printed circuit board (7, 8).

11. Device as claimed in claim 9 or 10, wherein the heat output by an energy storage cell (1-i) or by an energy storage cell group (12A, 12B) of the energy store (11) is detected by at least one associated temperature sensor which is provided on one of the printed circuit boards (7, 8) and transmits the detected temperature to the electronic monitoring unit (13) of the energy store (11) via sensor lines on the printed circuit board (7, 8).

12. Device as claimed in any one of the preceding claims 9 to 11, wherein the lines for the active current, the sensor lines and the sense lines (14-i) are run over one and the same printed circuit board (7, 8).

13. Device as claimed in any one of the preceding claims 1 to 12, wherein compensation resistors for converting excess charge from energy storage cells (1-i) of the energy store (11) into heat are provided and the heat produced thereby is output to the printed circuit boards (7, 8) via the electrically and thermally conductive contact element (4-i, 5-i),
wherein the heat output by the compensation resistors is distributed via the printed circuit boards (7, 8), consisting of heat-conducting layers, in a uniform manner in order to preheat the energy store (11), particularly in the case of low ambient temperatures.

14. Vehicle having an energy storage device (10) as claimed in any one of the preceding claims 1 to 13.

## Revendications

1. Dispositif d'accumulation d'énergie (10), qui comprend un accumulateur d'énergie (11), des cellules d'accumulateur d'énergie (1-i) de l'accumulateur d'énergie (11) étant reliées, respectivement au niveau de leurs pôles (2-i, 3-i) par le biais d'un élément de contact plat électriquement et thermiquement conducteur (4-i, 5-i) composé d'un matériau élastique, à un circuit imprimé (7, 8) qui est prévu pour séparer un courant électrique (I), qui s'écoule par la cellule d'accumulateur d'énergie (1-i) respective par le biais de l'élément de contact (2-i, 3-i), d'un courant thermique (Q^{•}ₛ) obtenu par le biais de l'élément de contact (2-i, 3-i), dans lequel l'élément de contact plat (4-i, 5-i) composé d'un matériau élastique obtient sa déformation élastique à partir de la modification d'une dilatation longitudinale dans la direction perpendiculaire aux surfaces de contact des pôles (2-i, 3-i),
dans lequel les circuits imprimés (7, 8) présentent respectivement une première couche électriquement et thermiquement conductrice (7-1, 8-1) qui repose sur l'élément de contact (4-i, 5-i), la première couche (7-1, 8-1) du circuit imprimé (7, 8) évacuant latéralement un courant électrique (I) qui s'écoule par le biais de l'élément de contact (4-i, 5-i) et transmettant un courant thermique (Q^{•}ₛ), qui s'écoule par le biais de l'élément de contact plat (4-i, 5-i), à une deuxième couche thermiquement conductrice (7-2, 8-2) du circuit imprimé (7, 8) qui restitue le courant thermique (Q^{•}ₛ) reçu par la première couche (7-1, 8-1) du circuit imprimé (7, 8) vers un environnement ou vers un liquide de refroidissement, et
dans lequel la deuxième couche (7-2, 8-2) du circuit imprimé (7, 8) est électriquement conductrice et est séparée de la première couche électriquement conductrice (7¬1, 8-1) du circuit imprimé (7, 8) par l'intermédiaire d'une couche intermédiaire (7-3, 8-3) du circuit imprimé (7, 8) qui est électriquement isolante,
dans lequel la couche intermédiaire (7-3, 8-3) du circuit imprimé (7, 8) qui est électriquement isolante est composée d'un matériau thermiquement conducteur,
dans lequel l'élément de contact plat (4-i, 5-i) respectivement prévu au niveau des deux pôles (2-i, 3-i) de la cellule d'accumulateur d'énergie électrique (1-i) est prévu entre le pôle respectif (2-i, 3-i) de la cellule d'accumulateur d'énergie électrique (1-i) et le circuit imprimé respectif (7, 8),
dans lequel le matériau électrique des éléments de contact plats (4-i, 5-i) est un matériau de contact élastique composé d'un mélange d'élastomère et de particules métalliques ou d'un élastomère conducteur et relie électriquement et thermiquement deux conducteurs électriques sans que ces conducteurs électriques se touchent, la surface du pôle respectif (2-i, 3-i) ou d'un conducteur électrique étant protégée totalement ou partiellement de tout contact avec l'humidité.

2. Dispositif selon la revendication 1,
dans lequel les cellules d'accumulateur d'énergie électrique (1-i) sont coincées entre deux circuits imprimés (7, 8) au niveau de leurs deux pôles (2-i, 3-i).

3. Dispositif selon la revendication 1 ou 2,
dans lequel les éléments de contact plats élastiques (4-i, 5-i) sont reliés aux circuits imprimés (7, 8) en forme de sandwich par complémentarité de surface.

4. Dispositif d'accumulation d'énergie selon une quelconque des revendications précédentes 1 à 3,
dans lequel les éléments de contact plats (4-i, 5-i) sont solidaires de la cellule d'accumulateur d'énergie respective (1-i) ou du circuit imprimé respectif (7, 8).

5. Dispositif d'accumulation d'énergie selon une quelconque des revendications précédentes 1 à 3,
dans lequel les éléments de contact plats (4-i, 5-i) sont formés par une masse pâteuse durcie par vieillissement qui est appliquée dans un espace intermédiaire entre la cellule d'accumulateur d'énergie respective (1-i) et le circuit imprimé respectif (7, 8).

6. Dispositif selon une quelconque des revendications précédentes 1 à 5,
dans lequel la première couche électriquement et thermiquement conductrice (7-1, 8-1) du circuit imprimé (7, 8) permet également une sortie latérale de chaleur en raison d'un agencement adapté des pôles.

7. Dispositif selon une quelconque des revendications précédentes 1 à 6,
dans lequel, dans ou sur la première couche électriquement et thermiquement conductrice (7-1, 8-1) du circuit imprimé (7, 8), des éléments de protection électrique (9-i) ou des rétrécissements sont prévus pour protéger des surintensités.

8. Dispositif selon une quelconque des revendications précédentes 1 à 7,
dans lequel l'accumulateur d'énergie électrique (11) présente plusieurs cellules d'accumulateur d'énergie (1-i) qui sont câblées en parallèle en un groupe de cellules d'accumulateur d'énergie (12A, 12B),
dans lequel plusieurs groupes de cellules d'accumulateur d'énergie (12A, 12B), qui présentent respectivement des cellules d'accumulateur d'énergie (1-i) câblées en parallèle, sont câblés en série dans l'accumulateur d'énergie (11) et dans lequel les cellules d'accumulateur d'énergie (1-i) comportent des systèmes d'accumulation chimiques ou physiques.

9. Dispositif selon la revendication 8,
dans lequel les groupes de cellules d'accumulateur d'énergie câblés en série (12A, 12B) de l'accumulateur d'énergie (11) sont prévus respectivement sur les fils de lecture (14-i) qui sont prévus dans les circuits imprimés (7, 8), sont reliés à une unité de surveillance électronique (13) qui surveille une tension électrique respectivement située au niveau du groupe de cellules d'accumulateur d'énergie (12A, 12B) de l'accumulateur d'énergie (11).

10. Dispositif selon une quelconque des revendications précédentes 8 ou 9,
dans lequel pour chaque groupe de cellules d'accumulateur d'énergie (12A, 12B) ou pour chaque cellule d'accumulateur d'énergie individuelle (1-i) d'un groupe de cellules d'accumulateur d'énergie (12A, 12B) un élément de protection électrique (9-i) est prévu pour la limitation de courant dans ou sur la première couche (7-1, 8-1) du circuit imprimé (7, 8).

11. Dispositif selon la revendication 9 ou 10,
dans lequel la chaleur restituée par une cellule d'accumulateur d'énergie (1-i) ou par un groupe de cellules d'accumulateur d'énergie (12A, 12B) de l'accumulateur d'énergie (11) est enregistrée par au moins un capteur de température correspondant qui est prévu sur un des circuits imprimés (7, 8) et la température enregistrée est signalée, par le biais des fils de capteur sur le circuit imprimé (7, 8), à l'unité de surveillance électronique (13) de l'accumulateur d'énergie (11).

12. Dispositif selon une quelconque des revendications précédentes 9 à 11,
dans lequel les fils pour le courant actif, les fils de capteur et les fils de lecture (14-i) sont guidés sur un seul et même circuit imprimé (7, 8).

13. Dispositif selon une quelconque des revendications précédentes 1 à 12,
dans lequel des résistances de compensation sont prévues pour transformer en chaleur la charge excédentaire des cellules d'accumulateur d'énergie (1-i) de l'accumulateur d'énergie (11) et restituent vers les circuits imprimés (7, 8) la chaleur produite par celles-ci par le biais des éléments de contact électriquement et thermiquement conducteurs (4-i, 5-i),
dans lequel la chaleur restituée par les résistances de compensation est distribuée de manière homogène sur les circuits imprimés (7, 8) composés de couches thermiquement conductrices pour préchauffer l'accumulateur d'énergie (11), en particulier dans le cas de températures ambiantes basses.

14. Véhicule comprenant un dispositif d'accumulation d'énergie (10) selon une quelconque des revendications précédentes 1 à 13.
